# FASCICULE DE BREVET EUROPEEN

(11) **EP 3 530 540 B1**
(45) Date de publication et mention de la délivrance du brevet: **16.02.2022**
(21) Numéro de dépôt: 19158763.3
(22) Date de dépôt: 22.02.2019
(51) Int. Cl.: B61D 17/08, B61D 27/00, B60H 1/00, F24F 7/10, F24F 13/06, B60H 1/24, F24F 13/08

(54) **DISPOSITIF DE DISTRIBUTION D'AIR, NOTAMMENT POUR UN VÉHICULE DE TRANSPORT PUBLIC**
LUFTVERTEILUNGSVORRICHTUNG, INSBESONDERE FÜR EIN ÖFFENTLICHES TRANSPORTFAHRZEUG
AIR DISTRIBUTION DEVICE, IN PARTICULAR FOR A PUBLIC TRANSPORT VEHICLE

(30) Priorité: 23.02.2018 FR 1851579
(43) Date de publication de la demande: 28.08.2019
(73) Titulaire: ALSTOM Transport Technologies, 93400 Saint-Ouen (FR)
(72) Inventeur: DO, Huu-Thi, 17300 Rochefort (FR); VARIN, Etienne, 17140 Lagord (FR)
(74) Mandataire: Lavoix

(56) Documents cités:
- EP-A1- 2 921 368
- EP-A1- 3 147 172
- CN-U- 201 890 229
- FR-A1- 2 461 606
- JP-A- 2000 255 255
- RU-C1- 2 268 833

## Description

La présente invention concerne un dispositif de distribution d'air, pour la distribution d'air provenant d'une unité de traitement d'air.

Des exemples de dispositifs de distribution d'air sont décrits dans EP 2 921 368 ou dans RU 2 268 833. Le document FR 2 461 606 A1 décrit un dispositif de distribution d'air provenant d'une unité de traitement d'air, le dispositif de distribution d'air comportant un conduit principal destiné à s'étendre longitudinalement dans un compartiment de passagers d'un véhicule de transport public, le conduit principal comprenant au moins deux sorties d'air destinées à déboucher vers le compartiment de passagers.

Un tel dispositif de distribution est par exemple destiné à équiper un véhicule de transport public. Dans ce cas, le dispositif de distribution comporte un conduit principal destiné à s'étendre longitudinalement dans un compartiment de passagers du véhicule de transport public, le conduit principal comprenant au moins deux sorties d'air destinées à déboucher vers le compartiment de passagers.

Le dispositif de distribution est préférablement destiné à distribuer l'air de la manière la plus uniforme possible le long du compartiment de passagers. Un tel dispositif est habituellement difficile à configurer et/ou à fabriquer, notamment lorsqu'il est destiné à être agencé dans un compartiment de passagers de grande longueur.

L'invention a notamment pour but de remédier à cet inconvénient, en fournissant un dispositif de distribution simple à réaliser, même lorsqu'il présente une grande longueur.

A cet effet, l'invention a notamment pour objet un dispositif de distribution d'air selon la revendication 1.

Le dispositif de distribution est donc fabriqué par l'assemblage de modules standardisés, ce qui facilite grandement sa conception. En particulier, la fabrication du dispositif de distribution reste aisée même lorsqu'il est destiné à équiper un compartiment de passagers de grande longueur, puisque la longueur du dispositif de distribution ne dépend que du nombre de modules qu'il comporte.

Un dispositif de distribution selon l'invention peut comporter en outre l'une ou plusieurs des caractéristiques suivantes, prises seules ou selon toutes combinaisons techniquement
- Chaque module est séparé de chacun des modules qui lui sont adjacents par au moins une paroi perforée.
- L'agencement de chaque déflecteur de chaque module est identique d'un module à l'autre.
- Le dispositif de distribution d'air comporte autant de sorties d'air que de modules, chaque sortie d'air étant portée par l'un respectif des modules.
- Chaque module comporte une paroi latérale comprenant la sortie d'air de ce module, l'au moins un déflecteur comprenant un premier déflecteur, incliné par rapport à la paroi latérale, délimitant avec cette paroi latérale la conduite débouchant à la sortie d'air correspondante.
- Chaque premier déflecteur s'étend entre une extrémité aval reliée à la paroi latérale, et une extrémité amont écartée de la paroi latérale.
- Chaque module comporte un unique déflecteur, formé par ledit premier déflecteur.
- Chaque module comporte une pluralité de déflecteurs comprenant, en plus du premier déflecteur, au moins un autre déflecteur parallèle au premier déflecteur.
- Chaque module comporte autant de déflecteurs que le conduit principal comporte de sorties d'air.

L'invention concerne également un véhicule de transport public, notamment véhicule ferroviaire, comportant au moins un compartiment pour passagers, caractérisé en ce qu'il comporte un dispositif de distribution tel que défini précédemment, s'étendant le long du compartiment pour passagers.

L'invention sera mieux comprise à la lecture de la description qui va suivre, donnée uniquement à titre d'exemple et faite en se référant aux figures annexées, parmi lesquelles :
- la figure 1 représente schématiquement un dispositif de distribution d'air selon un premier exemple de mode de réalisation de l'invention ;
- la figure 2 est une vue similaire à la figure 1 d'un dispositif de distribution d'air selon un deuxième exemple de mode de réalisation de l'invention.

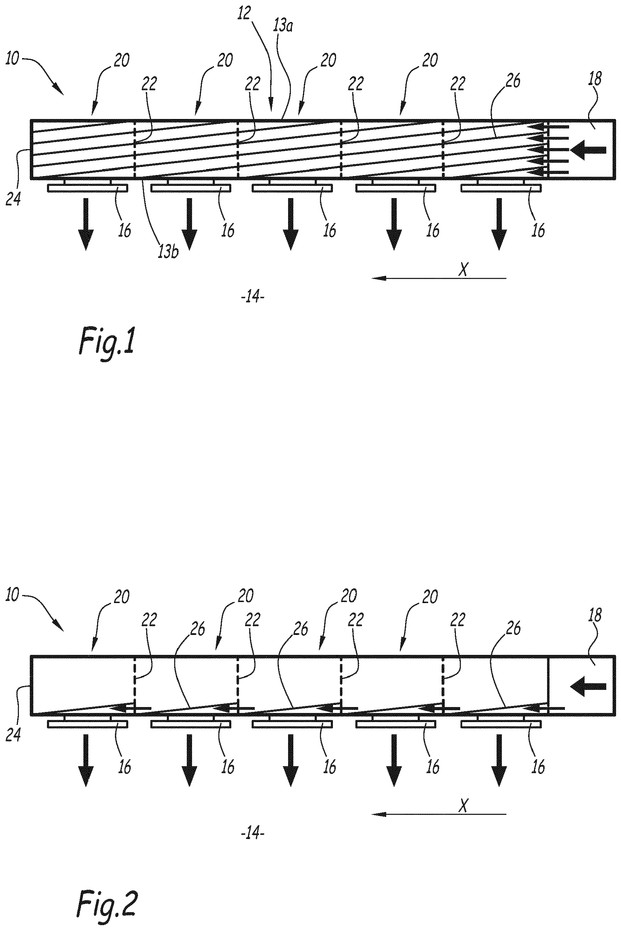

On a représenté, sur la figure 1, un dispositif 10 de distribution d'air, destiné à distribuer de l'air provenant d'une unité de traitement d'air, notamment de climatisation d'air (non représentée). Une telle unité de traitement d'air est classique et ne sera donc pas décrite en détail.

Le dispositif de traitement d'air 10 comporte un conduit principal 12 destiné à s'étendre le long d'une direction longitudinale X. Lorsque le dispositif de traitement d'air 10 équipe un véhicule de transport public, il est par exemple agencé dans un compartiment 14 de passagers de ce véhicule de transport public.

Le conduit principal 12 comporte des première 13a et seconde 13b parois latérales, s'étendant parallèlement entre elles et parallèlement à la direction longitudinale X.

Le conduit principal 12 comprend au moins deux sorties d'air 16 destinées à déboucher vers le compartiment de passagers 14. Plus particulièrement, dans l'exemple représenté, le conduit principal comporte cinq sorties d'air 16. Les sorties d'air 16 sont agencées dans la seconde paroi latérale 13b.

Chaque sortie d'air 16 est séparée de chaque sortie d'air qui lui est adjacente par une même distance. Ainsi, les sorties d'air 16 sont réparties de manière équitable le long du conduit principal 12.

Le conduit principal 12 comporte par ailleurs une entrée générale d'air 18 connectée à l'unité de traitement d'air. En d'autres termes, l'air traité provenant de l'unité de traitement d'air entre dans le conduit principal 12 à travers cette entrée générale 18, pour être ensuite distribué entre les sorties d'air 16.

Conformément à l'invention, le conduit principal 12 est formé par une pluralité de modules 20 similaires. Dans l'exemple décrit, le conduit principal 12 comporte cinq modules 20, soit un module 20 par sortie d'air 16. En variante, un module pourrait comporter deux sorties d'air ou plus.

Chaque module 20 est avantageusement séparé de chacun des modules 20 qui lui sont adjacents par au moins une paroi perforée 22. Chaque paroi perforée 22 forme par exemple une grille. Avantageusement, toutes les parois perforées 22 sont identiques.

Parmi les modules 20, on distinguera un module proximal communiquant avec l'entrée générale d'air 18, et un module distal délimité par une paroi pleine 24 dans la direction de l'axe longitudinal X.

Les modules sont assemblés entre eux, par exemple par collage, rivetage, ou tout autre moyen envisageable.

Chaque module 20 comporte au moins un déflecteur 26 délimitant en partie une conduite de circulation d'air débouchant à l'une des sorties d'air 16.

Conformément au premier mode de réalisation, chaque module 20 comporte une pluralité de déflecteurs 26 parallèles les uns par rapport aux autres. Sur la figure 1, on a représenté cinq déflecteurs 26 par module 20. Plus particulièrement, le nombre de déflecteurs par module 20 est par exemple égal au nombre de sorties 16 du dispositif de distribution 10, de manière à associer une conduite de circulation d'air à chaque sortie 16.

Avantageusement, tous les déflecteurs 26 sont séparés les uns des autres d'une même distance. Cette distance est par exemple égale à la distance entre les parois latérales 13a, 13b, divisée par le nombre de déflecteurs 26 dans un module.

Les déflecteurs 26 sont inclinés par rapport à la direction longitudinale X, donc inclinés par rapport aux parois latérales 13a, 13b.

Les déflecteurs 26 sont agencés de sorte que tout déflecteur 26 débouchant sur un autre module 20 se trouve dans le prolongement d'un déflecteur 26 de cet autre module. Ainsi, les déflecteurs 26 alignés définissent ensemble des conduites de circulation d'air, chaque conduite de circulation d'air s'étendant depuis l'entrée 18 et une sortie 16 respective.

On notera que chaque conduite de circulation est délimitée par des déflecteurs, et également par la seconde paroi latérale 13b à proximité de la sortie 16 correspondante. Plus particulièrement, à proximité de la sortie 16, la conduite de circulation est délimitée par la seconde paroi latérale 13b et un déflecteur 26 du même module 20, dit « premier déflecteur ». Ce premier déflecteur s'étend entre une extrémité aval reliée à la paroi latérale 13b, et une extrémité amont écartée de la paroi latérale 13b.

Toutes les conduites de circulation présentent des sections sensiblement identiques. Ainsi, le flux d'air est identique à chaque sortie 16. Le dispositif de distribution 10 permet donc une distribution homogène de l'air dans le compartiment.

Les modules 20 sont similaires, c'est-à-dire que l'agencement de chaque déflecteur 26 de chaque module 20 est identique d'un module 20 à l'autre.

On notera que l'inclinaison des déflecteurs 26 dépend du nombre de modules 20 envisagés. En effet, l'inclinaison des déflecteurs 26 est telle que le premier déflecteur du module distal, et tous les déflecteurs alignés avec ce premier déflecteur pour définir avec lui la conduite débouchant à la sortie 16 de ce module distal, sont agencés dans un plan passant par le coin défini entre la seconde paroi latérale 13b et la paroi pleine 24 d'une part, et par le coin défini entre la première paroi latérale 13A et l'interface entre le module proximal et l'entrée 18 d'autre part, comme cela est visible sur la figure 1.

On a représenté sur la figure 2 un dispositif de distribution selon un deuxième exemple de mode de réalisation de l'invention. Sur cette figure, les éléments analogues à ceux de la figure précédente sont désignés par des références identiques.

Conformément au deuxième mode de réalisation, chaque module 20 ne comporte qu'un unique déflecteur 26, formé par ledit « premier déflecteur », c'est-à-dire un déflecteur délimitant, avec la seconde paroi latérale 13b, une conduite de circulation débouchant à la sortie d'air 16 du même module 20.

Avantageusement, les parois perforées 22 s'étendent chacune uniquement au-dessus d'un déflecteur 26 respectif.

Ce deuxième mode de réalisation peut être moins performant que le premier mode de réalisation, mais il reste suffisamment performant. En revanche, ce deuxième mode de réalisation est plus simple et économique à mettre en œuvre.

On notera que l'invention n'est pas limitée aux modes de réalisation précédemment décrits et pourraient présenter diverses variantes dans le cadre des revendications.

## Revendications

1. Dispositif (10) de distribution d'air provenant d'une unité de traitement d'air, le dispositif de distribution d'air comportant un conduit principal (12) destiné à s'étendre longitudinalement dans un compartiment (14) de passagers d'un véhicule de transport public, le conduit principal (12) comprenant au moins deux sorties d'air (16) destinées à déboucher vers le compartiment de passagers (14),
**caractérisé en ce que** le conduit principal (12) est formé par une pluralité de modules (20) assemblés entre eux, tels que chaque module (20) comporte au moins un déflecteur (26) délimitant en partie une conduite de circulation d'air débouchant à l'une des sorties d'air (16).

2. Dispositif de distribution d'air (10) selon la revendication 1, dans lequel chaque module (20) est séparé de chacun des modules (20) qui lui sont adjacents par au moins une paroi perforée (22).

3. Dispositif de distribution d'air (10) selon la revendication 1 ou 2, dans lequel l'agencement de chaque déflecteur (26) de chaque module (20) est identique d'un module à l'autre.

4. Dispositif de distribution d'air (10) selon l'une quelconque des revendications précédentes, comportant autant de sorties d'air (16) que de modules (20), chaque sortie d'air (16) étant portée par l'un respectif des modules (20).

5. Dispositif de distribution d'air (10) selon la revendication 4, dans lequel chaque module (20) comporte une paroi latérale (13b) comprenant la sortie d'air (16) de ce module (20), l'au moins un déflecteur (26) comprenant un premier déflecteur, incliné par rapport à la paroi latérale (13b), délimitant avec cette paroi latérale (13b) la conduite débouchant à la sortie d'air (16) correspondante.

6. Dispositif de distribution d'air (10) selon la revendication 5, dans lequel chaque premier déflecteur s'étend entre une extrémité aval reliée à la paroi latérale (13b), et une extrémité amont écartée de la paroi latérale (13b).

7. Dispositif de distribution d'air (10) selon la revendication 5 ou 6, dans lequel chaque module (20) comporte un unique déflecteur (26), formé par ledit premier déflecteur.

8. Dispositif de distribution d'air (10) selon la revendication 5 ou 6, dans lequel chaque module comporte une pluralité de déflecteurs (26) comprenant, en plus du premier déflecteur, au moins un autre déflecteur parallèle au premier déflecteur.

9. Dispositif de distribution d'air (10) selon la revendication 8, dans lequel chaque module (20) comporte autant de déflecteurs (26) que le conduit principal (12) comporte de sorties d'air (16).

10. Véhicule de transport public, notamment véhicule ferroviaire, comportant au moins un compartiment (14) pour passagers, **caractérisé en ce qu'**il comporte un dispositif de distribution d'air (10) selon l'une quelconque des revendications précédentes, s'étendant le long du compartiment pour passagers (14).

## Patentansprüche

1. Luftverteilungsvorrichtung (10), wobei die Luft aus einer Luftbehandlungseinheit stammt, wobei die Luftverteilungsvorrichtung einen Hauptkanal (12) umfasst, der ausgelegt ist, um sich längs in einem Passagierabteil (14) eines öffentlichen Transportfahrzeugs zu erstrecken, wobei der Hauptkanal (12) mindestens zwei Luftausgänge (16) umfasst, die ausgelegt sind, um in Richtung des Passagierabteils (14) zu münden,
**dadurch gekennzeichnet, dass** der Hauptkanal (12) aus einer Vielzahl von Modulen (20) gebildet ist, die untereinander verbunden sind, so dass jedes Modul (20) mindestens einen Deflektor (26) umfasst, der teilweise einen Luftzirkulationskanal begrenzt, der in einen der Luftausgänge (16) mündet.

2. Luftverteilungsvorrichtung (10) nach Anspruch 1, wobei jedes Modul (20) von jedem der Module (20) getrennt ist, die ihm durch mindestens eine perforierte Wand (22) benachbart sind.

3. Luftverteilungsvorrichtung (10) nach Anspruch 1 oder 2, wobei die Anordnung jedes Deflektors (26) jedes Moduls (20) identisch von einem Modul zum anderen ist.

4. Luftverteilungsvorrichtung (10) nach einem der vorhergehenden Ansprüche, umfassend ebenso viele Luftausgänge (16) wie Module (20), wobei jeder Luftausgang (16) von einem entsprechenden der Module (20) getragen wird.

5. Luftverteilungsvorrichtung (10) nach Anspruch 4, wobei jedes Modul (20) eine seitliche Wand (13b) aufweist, umfassend den Luftausgang (16) dieses Moduls (20), wobei der mindestens eine Deflektor (26) einen ersten Deflektor umfasst, der mit Bezug auf die seitliche Wand (13b) geneigt ist, wobei mit dieser seitlichen Wand (13b) der Kanal begrenzt wird, der am entsprechenden Luftausgang (16) mündet.

6. Luftverteilungsvorrichtung (10) nach Anspruch 5, wobei jeder erste Deflektor sich zwischen einem nachgelagerten Ende, das mit der seitlichen Wand (13b) verbunden ist, und einem vorgelagerten Ende erstreckt, das von der seitlichen Wand (13b) entfernt ist, erstreckt.

7. Luftverteilungsvorrichtung (10) nach Anspruch 5 oder 6, wobei jedes Modul (20) einen einzigen Deflektor (26) umfasst, der von dem ersten Deflektor gebildet ist.

8. Luftverteilungsvorrichtung (10) nach Anspruch 5 oder 6, wobei jedes Modul eine Vielzahl von Deflektoren (26) umfasst, die, außer dem ersten Deflektor, mindestens einen anderen Deflektor parallel zum ersten Deflektor umfasst.

9. Luftverteilungsvorrichtung (10) nach Anspruch 8, wobei jedes Modul (20) ebenso viele Deflektoren (26) umfasst, wie der Hauptkanal (12) Luftausgänge (16) umfasst.

10. Öffentliches Transportfahrzeug, insbesondere Schienenfahrzeug, umfassend mindestens ein Passagierabteil (14), **dadurch gekennzeichnet, dass** es eine Luftverteilungsvorrichtung (10) nach einem der vorhergehenden Ansprüche umfasst, die sich entlang dem Passagierabteil (14) erstreckt.

## Claims

1. A device (10) for distributing air coming from an air treatment unit, the air distribution device including a main duct (12) intended to extend longitudinally in a passenger compartment (14) of a public transport vehicle, the main duct (12) comprising at least two air outlets (16) intended to open toward the passenger compartment (14),
**characterized in that** the main duct (12) is formed by a plurality of modules (20) assembled to one another, such that each module (20) includes at least one deflector (26) partly delimiting an air circulation duct opening at one of the air outlets (16).

2. The air distribution device (10) according to claim 1, wherein each module (20) is separated from each of the modules (20) adjacent to it by at least one perforated wall (22).

3. The air distribution device (10) according to claim 1 or 2, wherein the arrangement of each deflector (26) of each module (20) is identical from one module to the next.

4. The air distribution device (10) according to any one of the preceding claims, including the same number of air outlets (16) as modules (20), each air outlet (16) being borne by a respective one of the modules (20).

5. The air distribution device (10) according to claim 4, wherein each module (20) includes a side wall (13b) comprising the air outlet (16) for this module (20), the at least one deflector (26) comprising a first deflector, inclined relative to the side wall (13b), delimiting, with this side wall (13b), the duct opening at the corresponding air outlet (16).

6. The air distribution device (10) according to claim 5, wherein each first deflector extends between a downstream end connected to the side wall (13b) and an upstream end separated from the side wall (13b).

7. The air distribution device (10) according to claim 5 or 6, wherein each module (20) includes a single deflector (26), formed by said first deflector.

8. The air distribution device (10) according to claim 5 or 6, wherein each module includes a plurality of deflectors (26) comprising, in addition to the first deflector, at least one other deflector parallel to the first deflector.

9. The air distribution device (10) according to claim 8, wherein each module (20) includes the same number of deflectors (26) as the number of air outlets (16) that the main duct (12) includes.

10. A public transport vehicle, in particular a rail vehicle, including at least one passenger compartment (14), **characterized in that** it includes an air distribution device (10) according to any one of the preceding claims, extending along the passenger compartment (14).
